# EUROPÄISCHE PATENTANMELDUNG

(11) **EP 0 599 131 A2**
(43) Veröffentlichungstag der Anmeldung: **01.06.1994**
(21) Anmeldenummer: 93118192.9
(22) Anmeldetag: 10.11.1993
(51) Int. Cl.: H04M 11/04, F24F 11/00

(54) **System zur Überwachung haustechnischer Anlagen**

(30) Priorität: 20.11.1992 DE 4239111
(71) Anmelder: SCHIMMEL GmbH + CO. KG., D-95145 Oberkotzau/Hof (DE)
(72) Erfinder:
(74) Vertreter: Segeth, Wolfgang

(57) **Zusammenfassung**

Es wird ein System (22) zur Überwachung haustechnischer Anlagen wie Heizungs- und/oder Kühlanlagen o.dgl. mittels entsprechender Sensoreinrichtungen (10) und zur Störungsmeldung einer entsprechenden Anlage beschrieben. Die Sensoreinrichtungen (10) der zu überwachenden haustechnischen Anlagen sind mit einer hausinternen Kontrolleinrichtung (14) verbunden, die mittels einer ersten Datenübertragungsleitung (18) mit einer zentralen Kontrolleinrichtung (20) verbunden ist. Die zentrale Kontrolleinrichtung (20) ist für eine Anzahl hausinterner Kontrolleinrichtungen (14) vorgesehen. Die zentrale Kontrolleinrichtung (20) ist mittels einer zweiten Datenübertragungsleitung (32) mit mindestens einem externen Datenausgabegerät (34) verbunden.

## Beschreibung

Die Erfindung betrifft ein System zur Überwachung haustechnischer Anlagen wie Heizungs- und/oder Kühlanlagen o.dgl. mittels entsprechender Sensoreinrichtungen und zur Störungsmeldung, wobei die Sensoreinrichtungen der zu überwachenden haustechnischen Anlagen mit einer hausinternen Kontrolleinrichtung verbunden sind, die mittels einer ersten Datenübertragungsleitung mit einer zentralen Kontrolleinrichtung verbunden ist, die für eine Anzahl hausinterner Kontrolleinrichtungen vorgesehen ist.

Bekannte Systeme zur Überwachung haustechnischer Anlagen sind derartig ausgebildet, daß die Störungsmeldung an der entsprechenden Anlage erfolgt, was den Nachteil hat, daß eine entsprechende Störung oftmals erst sehr spät oder zu spät bemerkt wird, bzw. daß es einer mit der entsprechenden Anlage nicht gut vertrauten Person oftmals gar nicht möglich ist, eine gemeldete Störung richtig zu interpretieren. Soll dann ein Fachmann eine solche Störung beheben, so kann es vorkommen, daß er infolge falscher Information nur mit einer mangelhaften bzw. mit einer nicht passenden Ausrüstung die gestörte Anlage nicht sofort reparieren kann, was einen zusätzlichen Zeit- und Geldaufwand darstellt.

Aus der DE 33 05 901 A1 ist ein System der eingangs genannten Art bekannt. Dort handelt es sich um ein zyklisches Abfragesystem, mit welchem eine nach Meldepriorität geordnete selbsttätige Übertragung im Zeitmultiplex-Betrieb über eine Telefonleitung erfolgt. Das bedeutet jedoch, daß bei diesem bekannten System die zentrale Kontrolleinrichtung periodisch, d.h. immer wieder, abgefragt wird. Eine solche wiederholte Abfrage verursacht nicht unerhebliche Telefonkosten. Außerdem bedingt ein solcher Zeitmultiplex-Betrieb ein System, dessen baulicher Aufwand relativ groß ist.

Die DE 31 24 966 A1 offenbart ein Steuer- und Überwachungssystem für haustechnische Anlagen, insbes. für Klima- oder Betriebsanlagen, enthaltend mehrere jeweils Untereinheiten bildende Anlagenteile, ein Bedienungsfeld für die manuelle Beeinflussung und Überwachung des Systemes, sowie eine zentrale Datenverarbeitungsanlage. Mit diesem bekannten System soll die Aufgabe gelöst werden, eine Steuerkonsole anzugeben, welche raumsparend und mit geringem Aufwand zu installieren ist. Diese Aufgabe wird dort dadurch gelöst, daß das Bedienungsfeld so ausgebildet ist, daß es alle zur Steuerung und Überwachung jeweils eines aus einer Mehrzahl von Anlagenteilen notwendigen Schalt- und Anzeigenelemente enthält, daß mindestens ein Auswahlelement vorgesehen ist, mit dem jeweils eines der Anlagenteile dem Bedienungsfeld zur Beeinflussung und Überwachung zugeordnet werden kann, und daß durch das Auswahlelement Schaltmittel aktivierbar sind, die dem Bedienungsfeld den Zugriff zu Daten freigeben, die den Betriebszustand des jeweils zugeordneten Anlagenteils charakterisieren bzw. beeinflussen. Bei diesem bekannten System handelt es sich also nur um ein internes System, d.h. eine Datenübertragung von hausinternen zu überwachenden haustechnischen Anlagen. Eine externe zentrale Kontrolleinrichtung ist dort nicht vorgesehen.

Die DE-Z "net nachrichten elektronik + telematik" 37(1983) Heft 3, Seiten 93 bis 103 beschreibt ganz allgemein, wozu öffentliche Datennetze genutzt werden können.

Der Erfindung liegt die Aufgabe zugrunde, ein System der eingangs genannten Art zu schaffen, mit welchem die oben genannten Mängel eliminiert werden.

Diese Aufgabe wird erfindungsgemäß dadurch gelöst, daß die erste Datenübertragungsleitung von einer üblichen Telefonleitung des öffentlichen Telefonnetzes gebildet ist, und daß die zentrale Kontrolleinrichtung mittels einer zweiten von einer üblichen Telefonleitung des öffentlichen Telefonnetzes gebildeten Datenübertragungsleitung mit mindestens einem externen Datenausgabegerät verbunden ist, das zur Anzeige einer bzw. zur Benachrichtigung über eine entsprechende von der Sensoreinrichtung erfaßten und von der Kontrolleinrichtung in die entsprechenden Daten umgesetzten Störung vorgesehen ist.

Die hausinterne Kontrolleinrichtung ist hierbei dazu vorgesehen, die normalen Betriebsparameter der zugehörigen haustechnischen Anlagen zu speichern und im Fall einer Störung diese normalen Betriebsparameter mit den störungsbedingten Parameterwerten zu vergleichen, um die entsprechenden Daten zu erstellen, die dann über die erste Datenübertragungsleitung zur zentralen Kontrolleinrichtung geleitet werden, von wo sie mittels der zweiten Datenübertragungsleitung zu dem mindestens einen externen Datenausgabegerät weitergegeben werden. Dieses mindestens eine externe Datenausgabegerät ist zweckmäßigerweise bei einem Kundendienstmonteur und/oder bei einer geeigneten Fremdfirma installiert, so daß nach Auftreten einer Störung unverzüglich das passende Fachpersonal über die Störung informiert wird. Eine solche Störung kann dann mit minimalem Aufwand beseitigt werden. Bei der ersten und/oder zweiten Datenübertragungsleitung handelt es sich um eine Telefonleitung des öffentlichen Telefonnetzes, so daß insofern kein Systemaufwand entsteht. Die zentrale Kontrolleinrichtung ist zweckmäßigerweise dazu vorgesehen, eingehende Störungsmeldungen zu bewerten und automatisch an eine geeignete Fremdfirma und/oder an einen möglichst ortsnahen Kundendienstmonteur weiterzugeben.

Beim erfindungsgemäßen System sind die Sensoreinrichtungen vorzugsweise zum Erfassen eine Brennerstörung und/oder einer Pumpenstörung und/oder einer Störung der Abgastemperatur einer Heizungsanlage und/oder eines Brennstoffmangels für die Heizungsanlage und/oder einer Störung der Strömungsregelung in einer Heizungsanlage und/oder einer Störung in einer Hausalarmanlage und/oder eines Wassereinbruches und/oder einer Temperaturüberhöhung einer Kühleinrichtung und/oder einer Störung einer elektrischen Hausanlage vorgesehen. Selbstverständlich können entsprechende Sensoreinrichtungen beim erfindungsgemäßen System auch für andere an sich bekannte haustechnische Anlagen vorgesehen sein.

Als vorteilhaft hat es sich erwiesen, wenn an die zentrale Kontrolleinrichtung ein Computer angeschlossen ist, der mit mindestens einem Monitor und/oder mindestens einem Drucker verbunden ist. Bei diesem Computer handelt es sich zweckmäßigerweise um einen sog. Leitstellenrechner, der alle Daten bzw. Betriebsparameter der entsprechenden haustechnischen Anlagen beinhaltet, und mit welchem eine Verwaltung und Steuerung des gesamten Systems erfolgt. Von der zentralen Kontrolleinrichtung erfolgt die Alarmweitermeldung über die zweite Datenübertragungsleitung zweckmäßigerweise per Telefax, so daß beim entsprechenden Kundendienstmonteur bzw. bei der genannten Fremdfirma die entsprechenden Informationen dauerhaft zur Verfügung stehen. Bei diesen Informationen handelt es sich z.B. um die Bezeichnung der eine Störung aufweisenden haustechnischen Anlage bzw. deren Betriebsdaten, eine genaue Beschreibung der entsprechenden Störung sowie z.B. die Angabe der genauen Adresse der entsprechenden haustechnischen Anlage. Desgleichen kann diese Information eine Wegbeschreibung beinhalten, um es dem Monteur bzw. der Fremdfirma zu vereinfachen, die gestörte Anlage aufzufinden. Eventuell kann diese Wegbeschreibung eine Kopie einer entsprechenden Landkarte oder eine Kopie des entsprechenden Stadtplans beinhalten.

Beim erfindungsgemäßen System ist es - wie bereits erwähnt worden ist - zweckmäßig, wenn die zentrale Kontrolleinrichtung einen Speicher zur Speicherung der Daten aller angeschlossenen haustechnischen Anlagen aufweist.

Das bereits weiter oben erwähnte externe Ausgabegerät, das bspw. bei einem Kundendienstmonteur oder bei einer entsprechenden Fremdfirma installiert sein kann, ist zweckmäßigerweise ein Drucker und/oder ein Telefaxgerät.

Mit dem erfindungsgemäßen System ist es auf optimale Weise möglich, haustechnische Anlagen zu überwachen und mit relativ geringem Aufwand auftretende Störungen der besagten Anlagen zu beseitigen.

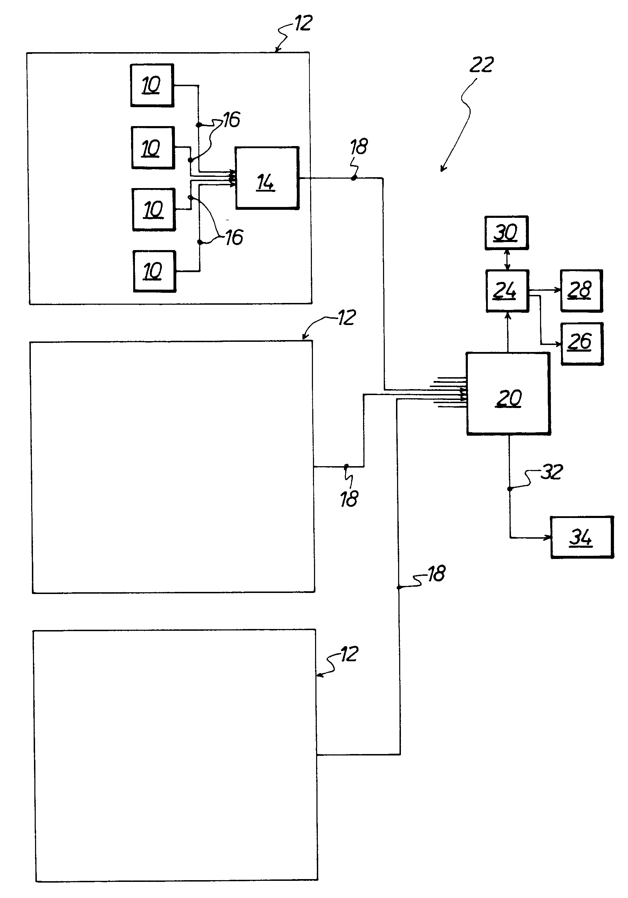

Weitere Einzelheiten, Merkmale und Vorteile ergeben sich aus der nachfolgenden Beschreibung eines in der Zeichnung schematisch angedeuteten Ausführungsbeispieles des erfindungsgemäßen Systems zur Überwachung haustechnischer Anlagen. Die Zeichnung zeigt in einer Blockdarstellung den (nicht dargestellten) haustechnischen Anlagen wie Heizungsanlagen, Kühleinrichtungen, Alarmanlagen, elektrische Anlagen usw. zugeordnete Sensoreinrichtungen 10. Die Sensoreinrichtungen 10 der entsprechenden haustechnischen Anlagen eines Hauses 12 sind mit einer hausinternen Kontrolleinrichtung 14 verbunden, was durch die Pfeile 16 angedeutet ist. Die hausinterne Kontrolleinrichtung 14 jedes Hauses 12 ist mittels einer ersten Datenübertragungsleitung 18, bei der es sich zweckmäßigerweise um eine öffentliche Telefonleitung handelt, mit einer zentralen Kontrolleinrichtung 20 des erfindungsgemäßen Systems 22 verbunden. Die zentrale Kontrolleinrichtung 20 weist einen Computer 24 auf, der mit einem Monitor 26 und/oder mit einem Drucker 28 verbunden ist. Ein Speicher 30 dient zum Speichern der Daten der angeschlossenen haustechnischen Anlagen der Häuser 12 des Systems 22. Bei diesen Daten handelt es sich um die normalen Betriebsdaten der entsprechenden haustechnischen Anlagen, um diese bei Auftreten einer Störung an einer haustechnischen Anlage mit den gestörten Betriebsdaten zu vergleichen, und eine entsprechende Betriebsmeldung im Computer 24 der zentralen Kontrolleinrichtung 20 zu erarbeiten. Die erarbeitete Störungsmeldung wird dann von der zentralen Kontrolleinrichtung 20 über eine zweite Datenübertragungsleitung 32, bei der es sich ebenfalls um eine Telefonleitung des öffentlichen Telefonnetzes handeln kann, an ein entsprechendes externes Datenausgabegerät 34 ausgegeben, bei dem es sich bspw. um ein Telefaxgerät oder um einen Drucker handelt, wobei das besagte Ausgabegerät 34 zweckmäßigerweise bei einem Kundendienstmonteur und/oder bei einer geeigneten Fremdfirma installiert ist, so daß jede an das Ausgabegerät 34 gemeldete Störung einer haustechnischen Anlage dem richtigen Haus 12 bzw. der entsprechenden haustechnischen Anlage zugeordnet wird und die Störung mit vergleichsweise geringem Aufwand behoben werden kann.

## Patentansprüche

1. System zur Überwachung haustechnischer Anlagen wie Heizungs- und/oder Kühlanlagen o.dgl. mittels entsprechender Sensoreinrichtungen (10) und zur Störungsmeldung, wobei die Sensoreinrichtungen (10) der zu überwachenden haustechnischen Anlagen mit einer hausinternen Kontrolleinrichtung (14) verbunden sind, die mittels einer ersten Datenübertragungsleitung (18) mit einer zentralen Kontrolleinrichtung (20) verbunden ist, die für eine Anzahl hausinterner Kontrolleinrichtungen (14) vorgesehen ist,
**dadurch gekennzeichnet,**
daß die erste Datenübertragungsleitung von einer üblichen Telefonleitung des öffentlichen Telefonnetzes gebildet ist, und daß die zentrale Kontrolleinrichtung (20) mittels einer zweiten von einer üblichen Telefonleitung des öffentlichen Telefonnetzes gebildeten Datenübertragungsleitung (32) mit mindestens einem externen Datenausgabegerät (34) verbunden ist, das zur Anzeige einer bzw. zur Benachrichtigung über eine entsprechende von der Sensoreinrichtung (10) erfaßten und von der Kontrolleinrichtung (20) in die entsprechenden Daten umgesetzten Störung vorgesehen ist.

2. System nach Anspruch 1,
**dadurch gekennzeichnet,**
daß die Sensoreinrichtungen (10) zum Erfassen einer Brennerstörung und/oder einer Pumpenstörung und/oder einer Störung der Abgastemperatur einer Heizungsanlage und/oder eines Brennstoffmangels für die Heizungsanlage und/oder einer Störung der Strömungsregelung in einer Heizungsanlage und/oder einer Störung in einer Hausalarmanlage und/oder eines Wassereinbruchs und/oder einer Temperaturüberhöhung einer Kühleinrichtung und/oder einer Störung einer elektrischen Hausanlage vorgesehen sind.

3. System nach Anspruch 1,
**dadurch gekennzeichnet,**
daß die zentrale Kontrolleinrichtung (20) einen Computer (24) aufweist, der mit mindestens einem Monitor (26) und/oder mit mindestens einem Drucker (28) verbunden ist.

4. System nach Anspruch 3,
**dadurch gekennzeichnet**,
daß die zentrale Kontrolleinrichtung (20) einen Speicher (30) zur Speicherung der Daten der angeschlossenen haustechnischen Anlagen aufweist.

5. System nach Anspruch 1,
**dadurch gekennzeichnet,**
daß das externe Datenausgabegerät (34) ein Drucker und/oder ein Telefaxgerät ist.
